# EUROPÄISCHE PATENTANMELDUNG

(11) **EP 3 517 891 A1**
(43) Veröffentlichungstag der Anmeldung: **31.07.2019**
(21) Anmeldenummer: 19154126.7
(22) Anmeldetag: 29.01.2019
(51) Int. Cl.: G01B 11/25

(54) **VORRICHTUNG ZUR MESSUNG NACH DEM LICHTSCHNITT-TRIANGULATIONSVERFAHREN**

(30) Priorität: 30.01.2018 DE 102018101995
(71) Anmelder: Gerndt, Willi, 82377 Penzberg (DE)
(72) Erfinder:
(74) Vertreter: DTS Patent- und Rechtsanwälte Schnekenbühl und Partner mbB

(57) **Zusammenfassung**

Die vorliegende Erfindung betrifft eine Vorrichtung (1) zur Messung nach dem Lichtschnitt-Triangulationsverfahren bestehend aus einem Projektor (10) und einer Kamera (20)
wobei der Projektor (10) einen Laser (11) aufweist, der auf einer vorbestimmten Wellenlänge abstrahlt und
wobei die Kamera (20) einen Bildaufnehmer (22) mit mindestens einem ersten und mindestens einem zweiten Sensoren (24.1, 24.2) aufweist, wobei der zweite Sensor (24.2) im Vergleich zu dem ersten Sensor (24.1) in Bezug auf die vorbestimmte Wellenlänge des Lasers (11) unempfindlicher ist, um bei einer Übersteuerung des von der Kamera (20) erfassten Laserlichts dessen Messsignal auf dem zweiten Sensor (24.2) zur Lichtschnittermittlung zu nutzen.

## Beschreibung

Die vorliegende Erfindung betrifft eine Vorrichtung zur Messung nach dem Lichtschnitt-Triangulationsverfahren.

Das Lichtschnitt-Triangulationsverfahren ist ein 3D-Messverfahren zur berührungslosen Vermessung von Gegenständen. Ein Projektor, ein durch den projizierten Lichtstrahl beleuchteter Oberflächenpunkt des Messobjekts und eine Kamera stellen ein Dreieck dar. Projektor und Kamera bilden die Basis des Dreiecks. Kennt man die Basislänge und die Winkel zwischen den Lichtstrahlen und der Basis, kann man den Ort des Schnittpunktes in Bezug zur Basis berechnen.

Wenn die abgetastete Oberfläche stark reflektiert, kann es zu Übersteuerungen kommen, die dazu führen, dass die detektierten Signale nicht auswertbar sind.

Es ist die Aufgabe der vorliegenden Erfindung, Vorrichtung zur Messung nach dem Lichtschnitt-Triangulationsverfahren bereitzustellen, die diese Nachteile vermeiden.

Diese Aufgabe wird erfindungsgemäß gelöst durch die Merkmale des Anspruchs 1. Vorteilhafte Ausgestaltungen sind in den Unteransprüchen angegeben.

Bevorzugt ist eine Vorrichtung zur Messung nach dem Lichtschnitt-Triangulationsverfahren vorgesehen, bestehend aus einem Projektor und einer Kamera, wobei der Projektor einen Laser aufweist, der auf einer vorbestimmten Wellenlänge abstrahlt und wobei die Kamera einen Bildaufnehmer mit mindestens einem ersten und mindestens einem zweiten Sensoren aufweist, wobei der zweite Sensor im Vergleich zu dem ersten Sensor in Bezug auf die vorbestimmte Wellenlänge des Lasers unempfindlicher ist.

Die Kamera umfasst einen Bildaufnehmer, der erste und zweite Sensoren aufweist, die unterschiedliche Empfindlichkeiten bezüglich der Lichtstrahlung des Projektors, bevorzugt eines Lasers, haben. Dadurch ist es möglich, bei einer Übersteuerung des von der Kamera erfassten Lichts - beispielsweise durch Reflexionen an der Oberfläche des Messobjekts - das Messsignal auf dem zweiten Sensor zu nutzen. Durch das Wissen um den Faktor, um den der zweite Sensor unempfindlicher ist als der erste Sensor, kann der Messwert für den ersten Sensor errechnet werden. Besonders bevorzugt kann das Messignal auf dem zweiten (unempfindlicheren) Sensor auch genutzt werden, um das aktuell gemessene Messignal auf dem ersten Sensor herunterzurechnen. Bevorzugt ist hierfür eine Steuervorrichtung vorgesehen. Mit dieser Steuervorrichtung können die Messignale verglichen und ausgewertet werden sowie skaliert und berechnet werden.

Bevorzugt strahlt der Laser im grünen Bereich ab, insbesondere mit einem Maximum bei 532nm.

Bevorzugt umfasst die Kamera einen RGB-Bildaufnehmer mit roten, grünen und blauen Farbsensoren, besonders bevorzugt einen RGB-Bildaufnehmer mit einer BAYER-Matrix. Hierbei stellen die grünen Farbsensoren die ersten Sensoren dar und die roten und/oder blauen Farbsensoren die zweiten Sensoren. Bei einem beispielsweise grünen Laserstrahl hat der grüne Sensor des RGB-Bildaufnehmers sein Maximum und kann dieses Licht besonders gut erfassen. Der grüne Sensor des RGB-Bildaufnehmers kann aber auch neben dem grünen Bereich und insbesondere der Wellenlänge 532nm noch ein Signal erkennen - wenn auch schlechter. Genauso ist es bei den roten und blauen Sensoren: auch diese Sensoren können bei einer grünen Wellenlänge von beispielsweise 532nm noch ein Signal erfassen, allerdings sehr viel schlechter als in ihren Maxima des roten bzw. blauen Lichts. Damit stellen die roten und blauen Sensoren in Bezug auf das grüne Laserlicht einen unempflindlicheren Sensor dar. Der rote Sensor detektiert nur ca. 5% des grünen Lichts verglichen mit dem grünen Sensor und der blaue Sensor detektiert nur ca. 19% des grünen Lichts verglichen mit dem grünen Sensor.

Damit dienen die roten und blauen Sensoren im RGB-Bildaufnehmer in Bezug auf das grüne Licht als unempfindlichere Sensoren als der grüne Sensor. Bevorzugt ist auch denkbar, dass ein Laser mit rotem Licht genutzt wird und der grüne bzw. blaue Sensor als unempfindlichere Sensoren eingesetzt werden, während der rote Sensor den ersten Sensor darstellt. Ebenfalls ist es denkbar, blaues Licht zu nutzen und den blauen Sensor als ersten Sensor und den roten und/ oder grünen Sensor als zweite Sensoren einzusetzen.

In der BAYER-Matrix befindet sich in jeder Zeile immer auch ein grüner Sensor - abwechselnd dann mit roten Sensoren bzw. in der Folgezeile mit blauen Sensoren. Damit ist bei der Auswertung einer Zeile immer das Signal von grünen Sensoren verfügbar und zusätzlich immer auch ein unempfindlicherer Sensor (rot bzw. blau). Damit ist vorteilhafterweise in einem solchen Sensor immer in jeder Zeile ein erster und ein zweiter Sensor vorhanden.

Bevorzugt ist der zweite Sensor im Vergleich zu dem ersten Sensor in Bezug auf die vorbestimmte Wellenlänge des Lasers um einen Faktor von mehr als fünf, bevorzugt mehr als 6, bevorzugt mehr als 7, bevorzugt mehr als 10, bevorzugt mehr als 15, insbesondere von mehr als zwanzig unempfindlicher.

Weitere Einzelheiten und Vorteile der Erfindung sollen nun anhand eines in den Zeichnungen dargestellten Ausführungsbeispiels näher erläutert werden.

Es zeigen:
- Fig. 1: eine schematische Ansicht eines Ausführungsbeispiels der erfindungsgemäßen Vorrichtung und
- Fig. 2: ein schematisches BAYER-Muster für die RGB-Sensoren eines RGB-Bildaufnehmers

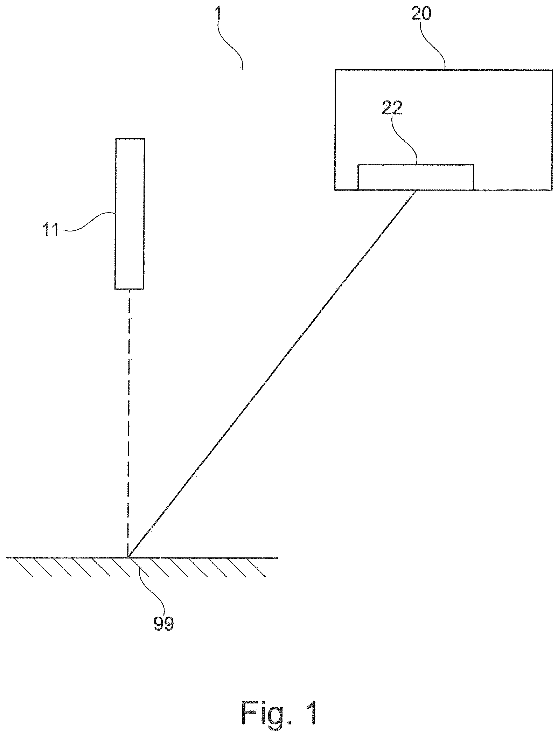

Fig. 1 zeigt eine schematische Ansicht eines Ausführungsbeispiels der erfindungsgemäßen Vorrichtung 1. Ein Linienlaser 11 mit einer Wellenlänge von 532nm ist auf ein Messobjekt 99 gerichtet. Die von dort reflektierte Strahlung wird von einem Bildaufnehmer 22 einer Kamera 20 erfasst. Der Bildaufnehmer 22 ist ein RGB-Bildaufnehmer mit roten, grünen und blauen Sensoren.

Wenn grünes Licht nun von der Oberfläche des Messobjekts 99 reflektiert und von dem Bildaufnehmer 22 erfasst wird, fällt dieses Licht auf grüne, rote und blaue Sensoren. Das Signal auf dem grünen Sensor ist im Vergleich zu dem Signal auf dem roten bzw. blauen Sensor sehr stark. Sollte das Signal des grünen übersteuert sein, so kann das Signal des roten bzw. blauen Sensors genutzt werden und über eine Steuereinrichtung der Wert heruntergerechnet werden.

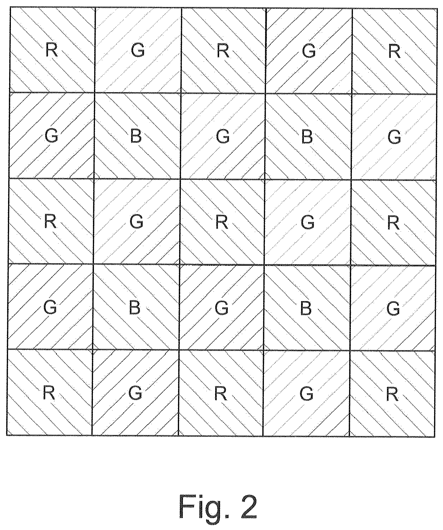

In Fig. 2 ist die bekannte BAYER-Matrix dargestellt und es ist erkennbar, dass in jeder Zeile immer auch grüne Sensoren vorhanden sind. So kann vorteilhafterweise bei Verwendung von grünem Licht in jeder Zeile ein Messignal erhalten werden und gelichzeitig befinden sich in jeder Zeile auch nicht-grüne Sensoren, die die Erfassung eines gedämpfteren Signals über die bezüglich des grünen Lichts unempfindlicheren Sensoren erlauben.

Mit der erfindungsgemäßen Vorrichtung ist es daher möglich, im Lichtschnitt-Triangulationsverfahren einen üblichen RGB-Sensor einzusetzen und übersteuerte Messignale auszugleichen, indem parallel die benachbarten (unempfindlicheren) Sensoren genutzt werden.

### Bezugszeichen liste

- 1: Vorrichtung zur Messung nach dem Lichtschnitt-Triangulationsverfahren
- 10: Projektor
- 11: Laser
- 20: Kamera
- 22: Bildaufnehmer
- 24: Sensor
- 99: Messobjekt

## Patentansprüche

1. Vorrichtung (1) zur Messung nach dem Lichtschnitt-Triangulationsverfahren bestehend aus einem Projektor (10) und einer Kamera (20)
wobei der Projektor (10) einen Laser (11) aufweist, der auf einer vorbestimmten Wellenlänge abstrahlt und
wobei die Kamera (20) einen Bildaufnehmer (22) mit mindestens einem ersten und mindestens einem zweiten Sensor (24.1, 24.2) aufweist, wobei der zweite Sensor (24.2) im Vergleich zu dem ersten Sensor (24.1) in Bezug auf die vorbestimmte Wellenlänge des Lasers (11) unempfindlicher ist, um bei einer Übersteuerung des von der Kamera (20) erfassten Laserlichts dessen Messsignal auf dem zweiten Sensor (24.2) zur Lichtschnittermittlung zu nutzen.

2. Vorrichtung (1) nach Anspruch 1, **dadurch gekennzeichnet, dass** der Laser (11) im grünen Bereich abstrahlt, insbesondere mit einem Maximum bei 532nm.

3. Vorrichtung (1) nach einem der Ansprüche 1 oder 2, wobei die Kamera (20) einen RGB-Bildaufnehmer mit roten, grünen und blauen Farbsensoren umfasst und wobei die grünen Farbsensoren die ersten Sensoren (24.1) darstellen und die roten und/oder blauen Farbsensoren die zweiten Sensoren (24.2) darstellen.

4. Vorrichtung (1) nach einem der vorhergehenden Ansprüche, **dadurch gekennzeichnet, dass** der zweite Sensor (24.2) im Vergleich zu dem ersten Sensor (24.1) in Bezug auf die vorbestimmte Wellenlänge des Lasers (11) um einen Faktor von mehr als fünf, insbesondere von mehr als zehn unempfindlicher ist.
